# EUROPÄISCHE PATENTANMELDUNG

(11) **EP 2 654 166 A1**
(43) Veröffentlichungstag der Anmeldung: **23.10.2013**
(21) Anmeldenummer: 13160150.2
(22) Anmeldetag: 20.03.2013
(51) Int. Cl.: H02J 3/38, H02J 3/28

(54) **Anordnung mit Netzüberwachungssystem**

(30) Priorität: 18.04.2012 DE 102012007632
(71) Anmelder: RWE Deutschland AG, 45128 Essen (DE)
(72) Erfinder: Schaarschmidt, Gunnar, Dipl.-Ing., 45770 Marl (DE); Hermes, Roland, Dr., 45141 Essen (DE)
(74) Vertreter: Cohausz & Florack

(57) **Zusammenfassung**

Die Erfindung betrifft eine Anordnung (2, 2.1), umfassend mindestens ein Stromnetz (4, 4.1) und mindestens ein Netzüberwachungssystem (12, 12.1, 12.2) zum Überwachen des Stromnetzes (4, 4.1),wobei mindestens eine Photovoltaikanlage (8) über einen Netzanschluss (24) mit dem Stromnetz (4, 4.1) zum Einspeisen von elektrischer Energie in das Stromnetz (4, 4.1) verbindbar ist, wobei das Netzüberwachungssystem (12, 12.1, 12.2) mindestens eine Überlasterfassungseinrichtung (14, 14.1, 14.2) eingerichtet zum Erfassen einer Überlast des Stromnetzes (4, 4.1) aufweist und das Netzüberwachungssystem (12, 12.1, 12.2) mindestens eine mit dem Stromnetz (4, 4.1) elektrisch verbindbare Energieabführeinrichtung (16, 16.1, 16.2) aufweist, wobei die Energieabführeinrichtung (16, 16.1, 16.2) eingerichtet ist, derart, dass bei einer Überlast des Stromnetzes (4, 4.1) zumindest die elektrische Überlastenergie zumindest teilweise in Form von Wärmeenergie aus dem Stromnetz (4, 4.1) abgeführt wird.

## Beschreibung

Die Erfindung betrifft eine Anordnung umfassend mindestens ein Stromnetz und mindestens ein Netzüberwachungssystem zum Überwachen des Stromnetzes, wobei mindestens eine Photovoltaikanlage über einen Netzanschluss mit dem Stromnetz zum Einspeisen von elektrischer Energie in das Stromnetz verbindbar ist. Darüber hinaus umfasst die Erfindung ein Verfahren zum Überwachen eines Stromnetzes und eine Verwendung einer Energieabführeinrichtung mit mindestens einer Heizeinrichtung.

Die Nachfrage nach Energie aus regenerativen Quellen steigt stetig. Eine der zur Verfügung stehenden Ressourcen ist hierbei die Sonnenenergie. Die Sonnenenergie kann durch photovoltaische Zellen, auch Solarzellen genannt, direkt in elektrische Energie gewandelt und beispielsweise in ein Stromnetz eingespeist werden.

In der Regel ist eine Mehrzahl von Solarzellen in einem Photovoltaikmodul integriert. Mehrere Photovoltaikmodule können durch eine Reihen- und/oder Parallelschaltung zu einer Photovoltaikanlage zusammengeschaltet sein.

Die Anzahl an installierten Photovoltaikanlagen im gesamten Netz nimmt rapide zu. Beispielsweise werden vermehrt Dächer von Gebäuden mit Photovoltaikanlagen ausgestattet. Neben der Energieversorgung des Gebäudes bzw. Haushaltes kann eine Photovoltaikanlage über einen Netzanschluss mit einem Stromnetz verbunden sein, um (überschüssige) elektrische

Energie in das Stromnetz einzuspeisen. Bei dem Stromnetz kann es sich um ein Verteilnetz, insbesondere ein

Niederspannungsnetz und/oder Mittelspannungsnetz, handeln, welches beispielsweise zur Versorgung einer Mehrzahl von Gebäuden mit elektrischer Energie vorgesehen ist. Beispielsweise kann ein Mittelspannungsnetz über eine Mehrzahl von Umspanneinrichtung mit einer entsprechenden Anzahl von Niederspannungsnetzen verbunden sein. Ein Niederspannungsnetz kann eine Spannung zwischen 230 V und 1000 V, üblicherweise von 230/400 V aufweisen. Ein Mittelspannungsnetz kann eine Spannung zwischen 6 kV und 60 kV, üblicherweise 10/20/30 kV, aufweisen.

Als ein Großteil dieser Niederspannungsnetze geplant und gebaut wurde, waren Photovoltaikanlagen als Energieeinrichtung noch eine Ausnahme. Das gesamte Stromnetz wurde daher ausgelegt, um die von wenigen Großkraftwerken erzeugte elektrische Energie zu den Endverbrauchern zu liefern. Dies führte dazu, dass die über Hoch- und Mittelspannungsnetzen mit den Großkraftwerken verbundenen Verteil- bzw. Niederspannungsnetze nur für den Transport einer vergleichsweisen geringen elektrischen Energiemenge konzipiert sind, da sie am Ende der Versorgungskette angeordnet sind.

Die wachsende Anzahl an Photovoltaikanlagen am Ende der Versorgungskette, also in den Verteilnetzen, bringt bei derartigen Stromnetzen das Problem einer deutlich höheren Belastung dieser Stromnetze mit sich. Durch die neu installierten Photovoitaikanlagen wird eine höhere Energiemenge in das entsprechende Stromnetz eingespeist, welche zu einer Überlast des Stromnetzes führen kann. Eine Überlast im Stromnetz, insbesondere ein zu hoher Strom, kann Beschädigungen an den Leitungen, Umspanneinrichtungen und sonstigen Komponenten des Stromnetzes zur Folge haben. Hierdruch kann es zu einem Ausfall des Stromnetzes kommen.

Um trotz der steigenden Anzahl an Photovoltaikanlagen und eine entsprechend größeren elektrischen Energiemenge einen sicheren Netzbetrieb der Verteilnetze gewährleisten zu können, werden im Stand der Technik verschiedene Lösungen vorgeschlagen. Beispielsweise wird ein Ausbau dieser Stromnetze vorgeschlagen, so dass diese den zukünftig zu erwartenden Energiemengen zu jeder Zeit gewachsen sind. Allerdings wären die mit einem derartigen Netzausbau einhergehenden Kosten immens. Insbesondere sind die Kosten im Vergleich zu dem Nutzen eines solchen Ausbaus erheblich, da eine Überlast eines Stromnetzes in Folge einer zu großen von mindestens einer Photovoltaikanlage eingespeisten elektrischen Energiemenge vergleichsweise selten auftritt (wenige Stunden pro Jahr).

Ein alternativer Lösungsansatz aus dem Stand der Technik ist, einem Netzbetreiber eine Möglichkeit für einen ferngesteuerten Zugriff auf jede Photovoltaikanlage zu ermöglichen. So ist in der aktuellen Version des deutschen Erneuerbare-Energien-Gesetzes vorgesehen, dass sämtliche Photovoltaikanlagen mit Inbetriebnahme nach einem bestimmten Stichtag und einer Leistung kleiner als 30 kW einen ferngesteuerten Zugriff auf die Photovoltaikanlage zulassen müssen, um im Bedarfsfall die Photovoltaikanlage vom Stromnetz trennen zu können. Diese Vorgabe führt zu sehr hohen Investitionskosten im Informations- und Kommunikationstechnologie Bereich. So müssen diese Photovoltaikanlage mit einer fernansteuerbaren und manipulationssicheren Schaltereinrichtung versehen werden. Insbesondere müssen viele der bereits installierten Photovoltaikanlagen mit einer entsprechenden Einrichtung ausgestattet werden. Jede dieser Einrichtungen muss wiederum eine Kommunikationsverbindung mit einer zentralen Steuereinrichtung des Netzbetreibers aufweisen. Jede Einrichtung kann dann durch den Netzbetreiber im Bedarfsfall, beispielsweise bei Messung eines zu hohen Stroms im Stromnetz, aktiviert werden, so dass die elektrische Verbindung zwischen der Photovoltaikanlage und dem Netz getrennt bzw. die Einspeiseleistung reduziert wird.

Neben einem immensen Aufwand zur Installation der Informations- und Kommunikationstechnologie ist zudem mit Akzeptanzproblem bei den Besitzern der Photovoltaikanlagen, auf die zugegriffen werden soll, zu rechnen. Darüber hinaus ist mit Abrechnungsproblemen bei einer vorübergehenden Trennung einer Photovoltaikanlage vom Stromnetz zu rechnen.

Eine weitere und einfacher umzusetzende Lösungsalternative des Standes der Technik ist ebenfalls in der aktuellen Version des deutschen Erneuerbare-Energien-Gesetzes vorgesehen. Bei dieser Alternative wird die Leistung an einem Netzanschlusspunkt, beispielsweise dem Netzanschluss der Photovoltaikanlage, pauschal auf 70 % der installierten Leistung begrenzt. Hierdurch kann zwar eine Überlast des Stromnetzes leicht verhindert werden, jedoch führt dies zum Verlust von in der Praxis noch einspeisbarer elektrischer Energie, da aufgrund von Gleichzeitigkeitsgraden in der Regel noch freie Kapazitäten in dem Stromnetz vorhanden sind.

Der Erfindung liegt daher die Aufgabe zugrunde, eine Anordnung mit einem Netzüberwachungssystem für ein Stromnetz mit mindestens einer anschließbaren Photovoltaikanlage zur Verfügung zu stellen, welche in einfacher Weise einen sicheren Schutz vor einer Überlast gewährleistet und gleichzeitig eine maximale Einspeisung von elektrischer Energie in das Stromnetz ermöglicht.

Die Aufgabe wird erfindungsgemäß bei einer Anordnung gemäß dem vorliegenden Patentanspruch 1 gelöst. Die Anordnung umfasst mindestens ein Stromnetz und mindestens ein Netzüberwachungssystem zum Überwachen des Stromnetzes, wobei mindestens eine Photovoltaikanlage über einen Netzanschluss mit dem Stromnetz zum Einspeisen von elektrischer Energie in das Stromnetz verbindbar ist. Das Netzüberwachungssystem weist mindestens eine Überlasterfassungseinrichtung eingerichtet zum Erfassen einer Überlast des Stromnetzes auf. Das Netzüberwachungssystem weist mindestens eine mit dem Stromnetz elektrisch verbindbare Energieabführeinrichtung auf, wobei die Energieabführeinrichtung eingerichtet ist, derart, dass bei einer Überlast des Stromnetzes zumindest die elektrische Überlastenergie aus dem Stromnetz zumindest teilweise in Form von Wärmeenergie abgeführt wird.

Im Gegensatz zum Stand der Technik wird erfindungsgemäß in einfacher Weise ein sicherer Schutz eines Stromnetzes vor einer Überlast gewährleistet, indem bei einer Überlast zumindest die Überlastenergie aus dem Stromnetz abgeführt wird. Insbesondere wird nur dann eine Überlastenergie abgeführt, wenn eine Überlast erfasst wird, so dass sichergestellt ist, dass im Regelbetrieb eine maximale Einspeisung von elektrischer Energie möglich ist.

Die Anordnung umfasst mindestens ein Stromnetz. Unter dem Stromnetz ist insbesondere ein Verteil- bzw.

Niederspannungsnetz zu verstehen. Das zu überwachende Stromnetz ist vorzugsweise über eine Mehrzahl von Netzanschlüssen mit einer entsprechenden Anzahl von Photovoltaikanlagen elektrisch verbindbar. Eine Photovoltaikanlage kann die Sonnenenergie in elektrische Energie wandeln und zumindest teilweise ins Stromnetz einspeisen.

Zur Überwachung des Stromnetzes weist die Anordnung ferner mindestens ein Netzüberwachungssystem auf. Das Netzüberwachungssystem umfasst mindestens eine Überlasterfassungseinrichtung und mindestens eine Energieabführeinrichtung auf. Die beiden Einrichtungen können als separate Einheiten oder als eine gemeinsame Einheit ausgebildet sein. Der Vorteil von separaten Einheiten besteht darin, dass die Einheiten an unterschiedlichen Orten, insbesondere entfernt voneinander, angeordnet sein können. Beispielsweise kann die Überlasterfassungseinrichtung auch in einer entfernt angeordneten Zentrale angeordnet sein.

Beispielsweise kann eine derartige Überlasterfassungseinrichtung vorgesehen sein, um eine Mehrzahl von Stromnetzen zentral zu überwachen und zu steuern. Andererseits kann für jedes Stromnetz eine dezentrale Steuerung vorgesehen sein, in dem die Überlasterfassungseinrichtung am zu überwachenden Stromnetz angeordnet ist. Es versteht sich, dass sowohl eine zentrale als auch eine dezentrale Überwachung implementiert sein kann.

Die Überlasterfassungseinrichtung ist zum Erfassen einer Überbelast des Stromnetzes eingerichtet. Beispielweise können der Überlasterfassungseinrichtung (aktuelle) Netzlastdaten zur Verfügung gestellt werden. Wird eine Überlast durch die Überlasterfassungseinrichtung erfasst, so kann die Energieabführeinrichtung von der Überlasterfassungseinrichtung angesteuert werden.

Die Energieabführeinrichtung ist dazu eingerichtet, zumindest die Überlastenergie abzuführen. Hierbei wird die Überlastenergie zumindest teilweise in Form von Wärmenergie abgeführt. Beispielsweise kann bei Detektion einer Überlast eine pauschale und vorgebbare Energiemenge abgeführt werden. Die vorgebbare Energiemenge kann derart gewählt sein, dass auch bei einer maximal möglichen Überlast ausreichend Energie abgeführt wird, ohne dass eine Deaktivierung einer Photovoltaikanlage erforderlich ist.

Ein Zugriff durch einen Netzbetreiber auf die mindestens eine Photovoltaikanlage ist nicht erforderlich. Die Installation eines Informations- und Kommunikationsnetzes zur Ansteuerung von jeder Photovoltaikanlage ist daher nicht notwendig. Kosten und Aufwand können reduziert werden. Abrechnungs- und Akzeptanzprobleme können vermieden werden.

Gemäß einer ersten Ausführungsform der erfindungsgemäßen Anordnung kann die Energieabführeinrichtung mindestens eine Heizeinrichtung aufweisen. Die Heizeinrichtung kann eingerichtet sein, zumindest einen Teil der elektrischen Überlastenergie in Wärmeenergie zu wandeln. Die Heizeinrichtung kann insbesondere ein oder mehrere Heizelement/e aufweisen. Ein Heizelement kann einen elektrischen Strom, welche dem Stromnetz entnommen werden kann, in Wärme wandeln. Beispielsweise kann eine Heizeinrichtung mit einer Leistung bis zu 100 kW vorgesehen sein. Eine entsprechende Energieabführeinrichtung kann in einfacher Weise hergestellt und betrieben werden.

Um die durch die Heizeinrichtung erzeugte Wärmeenergie besonders zeitnah abführen zu können, kann die Energieabführeinrichtung gemäß einer bevorzugten Ausführungsform zur Abführung der Wärmeenergie eine Gaskühlung und/oder eine Flüssigkeitskühlung aufweisen. Beispielsweise kann als Gaskühlung eine Luftkühlung vorgesehen sein. Alternativ oder zusätzlich kann als Flüssigkeitskühlung eine Wasserkühlung vorgesehen sein. Insbesondere eine Wasserkühlung ermöglicht eine schnelle und effektive Wärmeabführung. Beispielsweise kann/können ein oder mehrere Heizelemente in einem mit Wasser gefüllten Behälter angeordnet sein. Vorzugsweise ist der Behälter bzw. die Wassermenge derart bemessen, dass auch bei einer maximal abzuführenden Energiemenge für eine bestimmte Zeitdauer nicht die Siedetemperatur erreicht wird. Um eine besonders kompakte Energieabführeinrichtung bereitzustellen, kann eine Einrichtung, wie eine Pumpe oder ein Gebläse, vorgesehen, um das Kühlmedium aktiv an der Heizeinrichtung entlang zu führen. Diese Einrichtung kann beispielsweise zumindest teilweise mit der Überlastenergie betrieben werden.

Es versteht sich, dass die erzeugte Wärmenergie auch ggf. in ein Fernwärmesystem oder anderweitig nutzbringend eingespeist werden kann.

Gemäß einer bevorzugten Ausführungsform der erfindungsgemäßen Anordnung kann die Heizeinrichtung in einem Wärmespeicher eines Gebäudes integriert sein. Beispielsweise kann mindestens ein Heizelement, wie ein Heizstab, in dem Wärmespeicher angeordnet sein, um das in dem Wärmespeicher befindliche Wärmemittel zu erwärmen.

Heutzutage weisen eine Vielzahl von Gebäuden Wärmespeicher auf. Ein Wärmespeicher ist dazu eingerichtet, zumindest die für ein Gebäude, Wohnung, etc. erforderliche thermische Energie, beispielsweise zum Heizen der Wohnung oder zur Warmwasserversorgung, bereitzustellen. Vorzugsweise kann eine Mikrokraftwärmekopplungseinrichtung vorgesehen sein, um den Wärmespeicher zu betreiben.

Es ist erkannt worden, dass die überschüssige elektrische Energie aus dem Stromnetz eingesetzt werden kann, um einen mit einem zusätzlichen Heizstab ausgebildeten Wärmespeicher aufzuheizen. Anstelle der Aufheizung des Wärmespeichers beispielsweise durch die Mikrokraftwärmekopplungseinrichtung und der damit einhergehende Verbrauch von z.B. Erdgas kann die überschüssige elektrische Energie zur Aufheizung eingesetzt werden. Hierdurch kann eine Überlast des elektrischen Netzes verhindert und die überschüssige Energie für eine spätere Nutzung gespeichert werden. Zur Steuerung des Heizstabs kann insbesondere die Steuerung der Mikrokraftwärmekopplungseinrichtung eingesetzt werden. In einfacher Weise kann eine Mikrokraftwärmekopplungseinrichtung mit Wärmeeinrichtung zur Abführung von überschüssiger Energie aus dem elektrischen Netz genutzt werden.

Es versteht sich, dass der mindestens eine Heizstab des Wärmespeichers nur dann betrieben wird, wenn der Wärmespeicher sich nicht bereits bei einer maximal zulässigen Temperatur befindet.

Grundsätzlich ist die Erfassung einer Überlast in beliebiger Weise möglich. Vorzugsweise kann das Netzüberwachungssystem gemäß einer weiteren Ausführungsform mindestens eine Messeinrichtung, welche zum Messen von mindestens einem Netzlastparameter eingerichtet ist, aufweisen. Insbesondere weist die Überlasterfassungseinrichtung die mindestens eine Messeinrichtung auf. Alternativ kann die Überlasterfassungseinrichtung auch mit mindestens einer Messeinrichtung verbunden sein. Das Netzüberwachungssystem kann mindestens eine Auswerteeinrichtung eingerichtet zum Erfassen einer Überlast des Stromnetzes durch einen Vergleich des gemessenen Netzlastparameters mit einem vorgegebenen Netzlastgrenzwert aufweisen. Beispielsweise kann die Überlasterfassungseinrichtung die Auswerteeinrichtung umfassen. Der Netzlastparameter kann bevorzugt kontinuierlich gemessen werden. Ferner kann kontinuierlich ein Vergleich zwischen dem gemessenen Netzlastparameter und einem Netzlastgrenzwert durchgeführt werden. Der Netzlastgrenzwert kann vorgegeben werden und gibt insbesondere einen maximal zulässigen Grenzwert für den erfassten Netzlastparameter an, bei welchem das Stromnetz (noch) in sicherer Weise betrieben werden kann. Übersteigt der gemessene Netzlastparameter den Netzlastgrenzwert, so kann es zu Beschädigung des Stromnetzes kommen. Durch die Vergleichsoperation kann eine Überlast zeitnah und in einfacher Weise erfasst werden. Die Energieabführeinrichtung kann bei Erfassung einer Überlast entsprechend von der Auswerteeinrichtung angesteuert werden.

Es versteht sich, dass die Messung des Netzlastparameters und/oder die Vergleichoperation auch in vorgebbaren zeitlichen Abständen, beispielsweise periodisch, durchgeführt werden kann.

Wie bereits beschrieben wurde, kann bei Detektion einer Überlast vorgesehen sein, eine pauschale Energiemenge abzuführen, bei der sichergestellt ist, dass keine Überlast des Stromnetzes auftreten kann. Vorzugsweise kann vorgesehen sein, dass im Wesentlichen nur die Überlastenergie abgeführt wird. Gemäß einer bevorzugten Ausführungsform der erfindungsgemäßen Anordnung kann die Auswerteeinrichtung eingerichtet sein, in Abhängigkeit des gemessenen Netzlastparameters, beispielsweise in Abhängigkeit der Differenz zwischen dem gemessenen Netzlastparameter und dem vorgegebenen Netzlastgrenzwert, die abzuführende Überlastenergie zu bestimmen. Diese Bestimmung kann insbesondere kontinuierlich erfolgen. Indem aus dem gemessenen Netzlastparameter die aktuelle Überlastenergie bestimmt wird, ist es möglich, nur die Überlastenergie abzuführen. Es kann sichergestellt werden, dass stets die maximal mögliche Energiemenge geliefert werden kann. Ein dynamischer Überlastschutz kann bereitgestellt werden.

Gemäß einer weiteren Ausführungsform kann eine Steuereinrichtung zur Steuerung der Heizeinrichtung vorgesehen sein. Die Steuereinrichtung kann eingerichtet sein, die Heizeinrichtung in Abhängigkeit der bestimmten abzuführenden Überlastenergie zu steuern. Insbesondere kann die Steuereinrichtung eingerichtet sein, aus dem Stromnetz einen Strom abzuzweigen, so dass keine Überlast des Stromnetzes vorliegt. Vorzugweise kann eine stufenlose Steuerung vorgesehen sein. Wird beispielsweise durch die Überlasterfassungseinrichtung festgestellt, dass sich die Überlastenergie reduziert hat, zum Beispiel aufgrund eines aktivierten Verbrauchers in einem an das Stromnetz angeschlossen Gebäudes, kann die abgezweigte Strommenge (nahezu) unmittelbar reduziert werden. Zu jeder Zeit kann ein maximal zulässiger Strom in das Stromnetz eingespeist werden.

Als Netzlastparameter kann grundsätzlich jeder Parameter gemessen werden, welcher Rückschlüsse auf die aktuelle Stromnetzbelastung des zu überwachenden Stromnetzes erlaubt. Eine besonders einfache Überlasterfassung kann dadurch erzielt werden, wenn der gemessene Netzlastparameter ein im Stromnetz fließender Strom ist. Zum einen kann ein Strom durch ein Strommessgerät in einfacher Weise gemessen werden. Es versteht sich hierbei, dass ein Stromnetz eine Mehrzahl von Strommessgerät aufweisen kann.

Zum anderen ist die Strommenge ein eindeutiger Indikator für eine Überlast. Eine Überlast liegt insbesondere dann vor, wenn in dem Stromnetz ein Strom fließt, für den das Stromnetz nicht mehr ausgelegt ist. Zur Detektion eines derartigen Stroms kann insbesondere ein Stromgrenzwert vorgegeben werden. Alternativ kann aus dem gemessenen Strom in einfacher Weise die Ist-Leistung bestimmt werden. Diese kann mit einem vorgebbaren Leistungsgrenzwert verglichen werden.

Zusätzlich oder alternativ zu einer Strommessung kann der gemessene Netzlastparameter die auf die Photovoltaikanlage auftreffende Solarstrahlung sein. Die Solarstrahlung kann aus zur Verfügung stehenden meteorologischen Daten abgeleitet werden und/oder durch mindestens eine geeignete Messeinrichtung erfasst werden. Bei Kenntnis der aktuellen Solarstrahlung kann die durch die Photovoltaikanlagen einspeisbare elektrische Energie in das Stromnetz berechnet werden. Insbesondere kann die Leistungsfähigkeit der mindestens einen Photovoltaikanlage bekannt sein. Die Überlasterfassungseinrichtung kann dann eingerichtet sein, aus der (aktuellen) Solarstrahlung und der (aktuellen) Leistungsfähigkeit der mindestens einen Photovoltaikanlage die (aktuelle) Netzbelastung des Stromnetzes abzuleiten.

Vorzugsweise können eine Mehrzahl von Netzlastparametern erfasst und bei der Bestimmung der aktuellen Netzlast berücksichtigt werden. Ein Vorteil des Messens einer Mehrzahl von insbesondere unterschiedlichen Netzlastparametern ist, dass eine fehlerhafte Messung, beispielsweise aufgrund einer fehlerhaften Messeinrichtung, erkannt werden kann.

Gemäß einer weiteren Ausführungsform der erfindungsgemäßen Anordnung kann das Stromnetz ein Niederspannungsnetz sein. Insbesondere kann es sich um ein Orts- bzw. Stadtnetz handeln. Ein derartiges Stromnetz ist insbesondere dazu eingerichtet, eine Mehrzahl von Gebäuden bzw. Haushalten mit elektrischer Energie zu versorgen. Ein Niederspannungsnetz wird z.B. in Mitteleuropa üblicherweise mit Spannungen zwischen 230 V/400 V (einphasig/dreiphasig) bis zu 1000 V betrieben. Ferner kann ein Niederspannungsnetz ca. 100 bis 200 Haushalte mit elektrischer Energie versorgen. Das Niederspannungsnetz kann bevorzugt mindestens eine Umspanneinrichtung zur elektrischen Kopplung mit einem Mittelspannungsnetz aufweisen. Insbesondere kann mindestens ein Leistungstransformator als Umspanneinrichtung vorgesehen sein. Unter Mittelspannung wird in der elektrischen Energietechnik eine Hochspannung im Bereich über 1 kV und unter 75 kV verstanden. Üblicherweise kann ein Mittelspannungsnetz mit Hochspannung von 10 kV, 20 kV oder 30 kV betrieben werden. Es kann durch Erdkabel und/oder durch Freileitungen ausgeführt sein.

Es ist erkannt worden, dass bei einem Niederspannungsnetz die Umspanneinrichtung die kritische Komponente für eine Überlast des Stromnetzes sein kann. Insbesondere ist erkannt worden, dass die Stromkabel des Stromnetzes in der Regel eine ausreichend hohe Stromtragfähigkeit aufweisen können. Hingegen kann die Umspanneinrichtung, insbesondere ein Leistungstransformator, bei einer zu hohen Energiemenge, insbesondere Strommenge, überhitzen und beschädigt werden. Gemäß einer bevorzugten Ausführungsform der erfindungsgemäßen Anordnung kann der gemessene Netzlastparameter die Temperatur der Umspanneinrichtung sein. Hierdurch kann erfasst werden, ob die Temperatur der Umspanneinrichtung einen kritischen Grenzwert übersteigt. Wird eine entsprechende Temperatur gemessen, kann die Überlastenergie in zuvor beschriebener Weise abgeführt werden.

Gemäß einer weiteren bevorzugten Ausführungsform kann das Netzüberwachungssystem in (unmittelbarer) Nähe zu der Umspanneinrichtung angeordnet sein. Insbesondere kann zumindest die Energieabführeinrichtung an der Umspanneinrichtung angeordnet sein. Mit anderen Worten kann die elektrische Verbindung zwischen Stromnetz und Energieabführeinrichtung in (unmittelbarer) Nähe zur Umspanneinrichtung vorgesehen sein. Beispielsweise kann die Energieabführeinrichtung in einer Umspannanlage umfassend die mindestens eine Umspanneinrichtung integriert sein. Neben einer sicheren Positionierung und einfachen Zugänglichkeit der Energieabführeinrichtung ist die Anordnung der Energieabführeinrichtung direkt an der Umspanneinrichtung von Vorteil, um bei einer Überlast insbesondere der Umspanneinrichtung die Überlast von der Umspanneinrichtung mit maximaler Verfügbarkeit abzuführen. Ein weiterer Vorteil der räumlichen Nähe zwischen Netzüberwachungssystem und Umspanneinrichtung besteht darin, dass aktuell diskutierte und (teilweise) umgesetzte Kommunikationskonzepte bereits eine Kommunikationsverbindung von einer Zentrale bis zur Umspanneinrichtung und einer messtechnischen Ausrüstung der Umspannstation vorsehen, so dass eine einfache Anbindung des Netzüberwachungssystems an das Kommunikationsnetz möglich ist. Es versteht sich, dass das mindestens Netzüberwachungssystem auch an einer anderen Stelle des Stromnetzes, beispielsweise in der Mitte des Stromnetzes, angeordnet sein kann.

In einer weiteren Ausführungsform kann die Überlasterfassungseinrichtung zusammen mit der Energieabführeinrichtung als eine mobile mit dem Stromnetz verbindbare Überlastschutzvorrichtung gebildet sein. Unter einer mobilen Überlastschutzvorrichtung ist eine Einrichtung zu verstehen, welche in einfacher Weise transportiert und an ein Stromnetz, insbesondere ein Niederspannungsnetz, angeschlossen werden kann. Der Vorteil einer mobilen Überlastschutzvorrichtung ist, dass bei einem Stromnetz, welches beispielsweise vorübergehend eine geringe Leistungsfähigkeit aufweist oder zeitnah einen verbesserten Schutz benötigt, mit einer Überlastschutzvorrichtung verbunden und überwacht werden kann. Beispielsweise kann aufgrund von Bauarbeiten die Leistungsfähigkeit, insbesondere die Stromtragfähigkeit, des Stromnetzes reduziert sein. Da es sich lediglich um eine zeitweise und keine dauerhafte Leistungsreduktion handelt, kann bevorzugt eine mobile Überlastschutzvorrichtung für die entsprechende Zeitdauer an das Stromnetz angeschlossen werden. In einfacher Weise kann einer vorübergehenden Beeinträchtigung des Stromnetzes begegnet werden.

Darüber hinaus kann in einer weiteren Ausführungsform der erfindungsgemäßen Anordnung vorgesehen sein, dass das Netzüberwachungssystem über einen Kommunikationskanal mit einer entfernt angeordneten Zentrale verbunden ist. Der Kommunikationskanal kann drahtlos und/oder drahtgebundenen gebildet sein. Die Zentrale kann insbesondere eine zentrale Steuereinrichtung des Netzbetreibers sein und entsprechende Rechenmittel, wie Computer, umfassen. Insbesondere kann mit der Zentrale eine Vielzahl von Netzüberwachungssystemen von einem und/oder mehreren Stromnetz/en verbunden sein. Beispielsweise kann die Zentrale das mindestens eine Netzüberwachungssystem überwachen und insbesondere über die gemessenen Netzlastparameter und/oder eine erfasste Überlast des Stromnetzes informiert werden. Aus den erfassten Daten in der Zentrale kann beispielsweise geschlossen werden, dass ein Ausbau eines bestimmten Stromnetzes erforderlich ist. Wenn beispielsweise in einem bestimmten Stromnetz häufig eine hohe Überlast auftritt und eine große Energiemenge abgeführt werden muss, kann geschlossen werden, dass dieses Stromnetz ausgebaut werden sollte. Ferner kann die mindestens eine Energieabführeinrichtung von der Zentrale ferngesteuert werden.

Ein weiterer Aspekt der Erfindung ist ein Verfahren zum Überwachen eines Stromnetzes, wobei mindestens eine an das Stromnetz über einen Netzanschluss verbindbare Photovoltaikanlage vorgesehen ist. Das Verfahren umfasst die Schritte:
- Erfassen einer Überlast des Stromnetzes und
- Abführen zumindest der elektrischen Überlastenergie aus dem Stromnetz zumindest teilweise in Form von Wärmeenergie bei einer Erfassung einer Überlast des Stromnetzes.

Das Verfahren kann insbesondere bei einer zuvor beschriebenen Anordnung verwendet werden. Durch das erfindungsgemäße Verfahren kann in einfacher Weise ein sicherer Schutz eines Stromnetzes vor einer Überlast gewährleistet werden. Ein Zugriff durch einen Netzbetreiber auf die mindestens eine Photovoltaikanlage ist nicht erforderlich. Die Installation eines Informations- und Kommunikationsnetzes ist somit nicht notwendig. Kosten und Aufwand können reduziert werden. Abrechnungs- und Akzeptanzprobleme können vermieden werden.

Ein noch weiterer Aspekt der Erfindung ist eine Verwendung einer Energieabführeinrichtung mit mindestens einer Heizeinrichtung zur Abführung von zumindest der elektrischen Überlastenergie aus einem von mindestens einer Photovoltaikanlage speisbaren Stromnetz. Insbesondere kann die elektrische Überlastenergie in Form von Wärmeenergie abgeführt werden. Die Energieabführeinrichtung kann insbesondere eine zuvor beschriebene Energieabführeinrichtung sein, wie eine in einem Wärmespeicher integrierte Heizeinrichtung.

Durch die Verwendung einer Energieabführeinrichtung mit einer Heizeinrichtung zur Abführung von einer elektrischen Überlastenergie kann in einfacher Weise ein sicherer Schutz eines Stromnetzes vor einer Überlast gewährleistet werden. Ein Zugriff durch einen Netzbetreiber auf die mindestens eine Photovoltaikanlage ist nicht erforderlich. Die Installation eines Informations- und Kommunikationsnetzes ist somit nicht notwendig. Kosten und Aufwand können reduziert werden. Abrechnungs- und Akzeptanzprobleme können vermieden werden.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Anordnung und das erfindungsgemäße Verfahren sowie die erfindungsgemäße Verwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines ersten Ausführungsbeispiels einer Anordnung gemäß der vorliegenden Erfindung mit einem Netzüberwachungssystem;

- Fig. 2: eine schematische Ansicht eines Ausführungsbeispiels einer Netzüberwachungssystems gemäß der vorliegenden Erfindung; und
- Fig. 3: eine schematische Ansicht eines weiteren Ausführungsbeispiels einer Anordnung gemäß der vorliegenden Erfindung mit einem Netzüberwachungssystems.

Nachfolgend werden für gleiche Elemente gleiche Bezugszeichen verwendet.

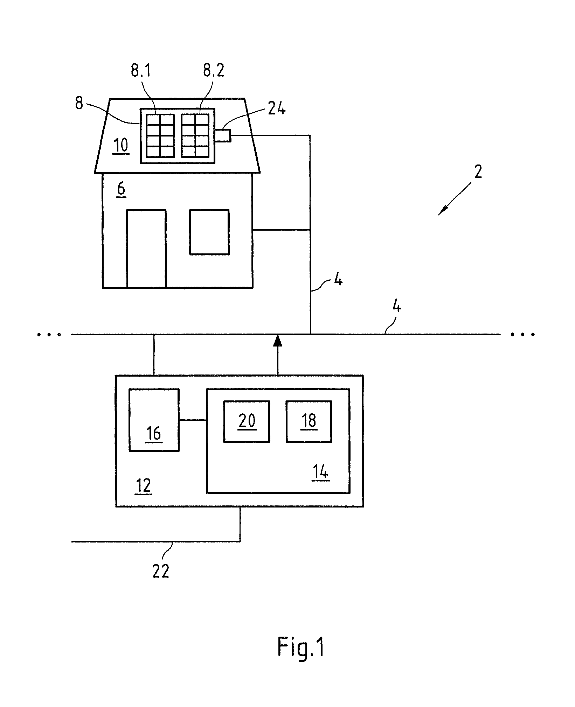

Figur 1 zeigt eine schematische Ansicht eines ersten Ausführungsbeispiels einer Anordnung 2 gemäß der vorliegenden Erfindung mit einem Netzüberwachungssystem 12. Wie aus der Figur 1 zu erkennen ist, weist die Anordnung 2 ein Stromnetz 4 auf. Bei dem Stromnetz 4 handelt es sich insbesondere um ein Niederspannungsnetz, wie beispielsweise ein 230 V oder 400 V Niederspannungsnetz. Das Niederspannungsnetz 4 kann Erdkabel und/oder Freileitungen umfassen. Das Niederspannungsnetz 4 kann weitere Komponenten, wie Umspanneinrichtung und dergleichen, umfassen. Im vorliegenden Ausführungsbeispiel ist das Stromnetz 4 unter anderem zur Versorgung eines Gebäudes 6 mit elektrischer Energie eingerichtet. Es versteht sich, dass ein Verteilnetz 4 in der Regel zur Versorgung einer Mehrzahl von Gebäuden vorgesehen ist.

Das Gebäude 6 weist auf seinem Dach 10 eine Photovoltaikanlage 8 auf. Vorliegend weist die Photovoltaikanlage 8 zwei Photovoltaikmodule 8.1, 8.2 auf. Es versteht sich, dass nur ein Photovoltaikmodul oder eine Vielzahl von Photovoltaikmodulen vorgesehen sein kann. Ferner kann die Photovoltaikanlage 8 auch an einer anderen Stelle, beispielsweise neben dem Gebäude 6, angeordnet sein.

Die Photovoltaikanlage 8 ist über einen Netzanschluss 24 mit dem Stromnetz 4 verbindbar. Beispielsweise kann der Netzanschluss 24 eine Schaltereinrichtung umfassen. Die Photovoltaikanlage 8 ist dazu eingerichtet, die Sonnenenergie in elektrische Energie zu wandeln. Zumindest die Überschussenergie, die nicht von den Verbrauchern des Gebäudes 6 genutzt wird, kann von der Photovoltaikanlage 8 ins Stromnetz 4 eingespeist werden.

Darüber hinaus ist ein Netzüberwachungssystem 12 vorgesehen. Das Netzüberwachungssystem 12 umfasst eine Überlasterfassungseinrichtung 14. Die Überlasterfassungseinrichtung 14 ist dazu eingerichtet, eine Überlast des Stromnetzes 4 zu erfassen.

Das Stromnetz 4 ist zur Übertragung einer bestimmten maximalen Energiemenge ausgelegt. Insbesondere weist das Stromnetz 4 eine maximal zulässige Stromtragfähigkeit auf. Zu einer Überlastung des Stromnetzes 4 kann es kommen, wenn durch die mindestens eine Photovoltaikanlage 8 mehr elektrische Energie in das Stromnetz 4 eingespeist wird, als zugelassen ist. Eine entsprechende Überlast kann auf verschiedene Weise erfasst werden. Vorliegend umfasst die Überlasterfassungseinrichtung 14 eine Messeinrichtung 18. Die Messeinrichtung 18 ist insbesondere eine Strommesseinrichtung 18. Die Strommesseinrichtung 18 ist dazu eingerichtet, den im Stromnetz 4 fließenden Strom vorzugsweise kontinuierlich zu messen.

Darüber hinaus umfasst die Überlasterfassungseinrichtung 14 im vorliegenden Ausführungsbeispiel eine Auswerteeinrichtung 20. Die Auswerteeinrichtung 20 ist insbesondere dazu eingerichtet, in Abhängigkeit des gemessenen Stroms eine Überlast des Stromnetzes 4 zu erfassen.

Neben einer Überlasterfassungseinrichtung 14 umfasst das Netzüberwachungssystem 12 eine Energieabführeinrichtung 16. Die Energieabführeinrichtung 16 ist dazu eingerichtet, zumindest die elektrische Überlastenergie aus dem Stromnetz 4 bei einer Erfassung einer Überlast des Stromnetzes 4 zumindest teilweise in Form von Wärme abzuführen. Vorzugsweise ist die Energieabführeinrichtung 16 dazu eingerichtet, die gesamte überschüssige elektrische Energie in Wärme zu wandeln. Eine Beschädigung des Stromnetzes 4 kann in einfacher und gleichzeitig sicherer Weise vermieden werden.

Ferner kann der Figur 1 entnommen werden, dass ein Kommunikationskanal 22 vorgesehen sein kann. Der Kommunikationskanal 22 kann drahtlos und/oder drahtgebunden gebildet sein. Der Kommunikationskanal 22 kann dazu eingerichtet sein, eine Kommunikation zwischen einer entfernt angeordneten Zentrale und dem Netzüberwachungssystem 12 zu ermöglichen. Insbesondere kann ein bidirektionaler Datenaustausch bereitgestellt werden.

Es versteht sich, dass je nach Ausbildung des Netzüberwachungssystems 12 sämtliche Einrichtungen 14, 16, 18 und 20 einen eigenen Kommunikationsanschluss aufweisen können.

Nachfolgend wird die Funktionsweise des dargestellten Netzüberwachungssystems 12 beispielhaft erläutert. Die mindestens eine Photovoltaikanlage 8 speist elektrische Energie über den Netzanschluss 24 ins Stromnetz 4 ein. Beispielsweise an Tagen mit einer hohen Strahlungsintensität kann es zumindest zeitweise zu einer Überlast des Stromnetzes 4 kommen. Ein anderer beispielhafter Grund einer Überlast kann darin liegen, dass beispielsweise aufgrund von Bauarbeiten die Belastungsfähigkeit des Stromnetzes 4 vorübergehend reduziert ist.

Zur Erfassung einer Überlast des Stromnetzes 4 kann der im Stromnetz 4 fließende Strom von der Messeinrichtung 18 gemessen werden. Es ist erkannt worden, dass sich eine Überlast insbesondere durch einen zu hohen Strom im Stromnetz 4 zeigt. Insbesondere kann die Strommesseinrichtung 18 den Strom kontinuierlich messen. Wie nachfolgend noch ausgeführt wird, können alternativ oder zusätzlich andere Netzlastparameter erfasst werden.

Wie bereits beschrieben wurde, umfasst die Überlasterfassungseinrichtung 14 vorliegend neben einer Strommesseinrichtung 18 eine Auswerteeinrichtung 20. Die Auswerteeinrichtung 20 kann dazu eingerichtet sein, den gemessenen (aktuellen) Stromwert auszuwerten und insbesondere mit einem vorgegebenen maximal zulässigen Stromgrenzwert zu vergleichen. Es versteht sich, dass alternativ aus dem gemessenen Stromwert zunächst die Ist-Leistung berechnet werden kann. Der Ist-Leistungswert kann dann mit einem vorgegebenen maximal zulässigen Leistungsgrenzwert verglichen werden.

Im Regelfall liegt der gemessene Stromwert unter dem maximal zulässigen Stromwert, welcher ein Maß für die maximal zulässige Belastung des Stromnetzes 4 ist. Dieser Grenzwert kann insbesondere von einem Netzbetreiber in Abhängigkeit der Ausgestaltung des Stromnetzes 4 vorgegeben werden. Die Auswerteeinrichtung 20 kann zur Detektion einer Überlast dazu eingerichtet sein, ein Überschreiten des Grenzwerts zu detektieren. Wird ein Überschreiten des Grenzwerts detektiert, so kann die Energieabführeinrichtung 16 (unmittelbar) aktiviert werden.

Die Energieabführeinrichtung 16 kann dazu eingerichtet sein, beispielsweise unabhängig von der tatsächlichen Überlastenergie stets eine vorgegebene Energiemenge bei einer Überlast zumindest teilweise in Wärmeenergie zu wandeln. Die vorgebbare Energiemenge kann derart gesetzt werden, dass auch bei einer maximalen Einspeisung von sämtlichen Photovoltaikanlagen ein sicherer Betrieb des Stromnetzes 4 möglich ist.

Alternativ kann die überschüssige Energie aus dem aktuellen Strom berechnet werden. Dann kann nahezu genau die Überlastenergie durch die Energieabführeinrichtung 16 abgeführt werden. Die abzuführende Überlastenergie kann kontinuierlich bestimmt und entsprechend abgeführt werden.

Im vorliegenden Ausführungsbeispiel sind die Überlasterfassungseinrichtung 14 und die Energieabführeinrichtung 16 als separate Einrichtungen 14, 16 ausgeführt. Der Vorteil einer entsprechenden Anordnung besteht darin, dass die Messung von z.B. einem Strom an einem anderen Ort als die Energieabführung aus dem Stromnetz 4 durchgeführt werden kann.

Alternativ können die Überlasterfassungseinrichtung 14 und die Energieabführeinrichtung 16 auch in einer gemeinsamen Überlastschutzvorrichtung integriert sein. Diese kann zudem mobil ausgebildet sein. Eine mobil ausgebildete Überlastschutzvorrichtung bietet den Vorteil, diese (nur) bei Bedarf an das Stromnetz 4 anzuschließen. Beispielsweise kann eine (zusätzliche) Überlastschutzvorrichtung im Falle von Bauarbeiten am Stromnetz 4 erforderlich sein.

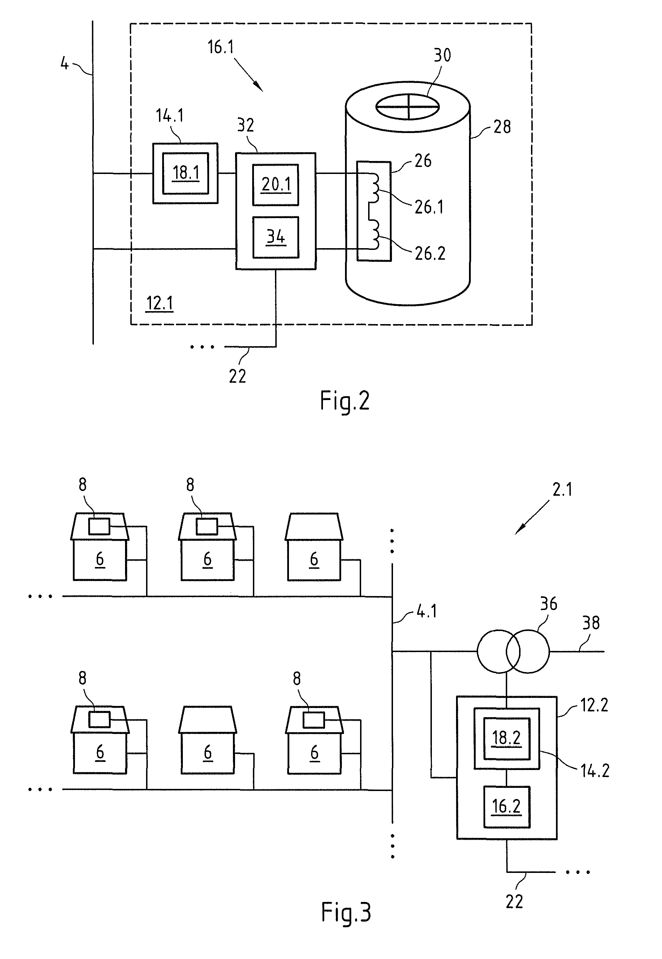

Figur 2 zeigt eine schematische Ansicht eines Ausführungsbeispiels eines Netzüberwachungssystem 12.1 gemäß der vorliegenden Erfindung. Die Netzüberwachungssystem 12.1 weist eine elektrische Verbindung mit dem Stromnetz 4 auf. Insbesondere ist die Energieabführeinrichtung 16.1 mit dem Stromnetz 4 elektrisch verbindbar.

Darüber hinaus ist die Energieabführeinrichtung 16.1 mit einer Überlasterfassungseinrichtung 14.1, welche eine Messeinrichtung 18.1 umfasst, verbunden. Wie bereits beschrieben wurde, kann diese auch in der Energieabführeinrichtung 16.1 integriert sein.

Zur Abführung der elektrischen Energie umfasst die Energieabführeinrichtung 16.1 eine Heizeinrichtung 26. Beispielhaft sind vorliegend zwei Heizelemente 26.1, 26.2 vorgesehen. Für den Fall, dass eine Mehrzahl von Heizelementen vorgesehen ist, kann mindestens eins, vorzugsweise sämtliche Heizelement, separat voneinander ansteuerbar sein. Die Heizelemente 26.1, 26.2 sind vorliegend in einem Behälter 28 angeordnet.

Der Behälter 28 kann in einem einfachen Fall mit Luft gefüllt sein. Optional kann eine Einrichtung 30 zum Fördern des Kühlmediums vorgesehen. Bei einem gasförmigen Medium kann ein Gebläse 30 vorgesehen sein. Das Gebläse 30 kann eine Luftströmung erzeugen, um die erwärmten Luftmassen abzuführen. Vorzugsweise kann das Gebläse 30 über das Stromnetz 4 mit Energie versorgt werden.

Alternativ zu Luft kann der Behälter 28 mit einer Flüssigkeit, vorzugsweise Wasser, gefüllt sein. Vorteilhafter Weise kann der Behälter 28 so dimensioniert sein, dass eine Ableitung der Wärme von der Heizeinrichtung 26 durch die Flüssigkeit gewährleistet ist, ohne dass die Siedetemperatur der Flüssigkeit erreicht wird. Die Abkühlung der Flüssigkeit erfolgt automatisch in Zeiten, in denen eine geringe Belastung des Stromnetzes 4 vorliegt, wie beispielsweise in der Nacht. Zusätzlich kann eine Einrichtung 30 zur Förderung des Kühlmediums vorgesehen. Beispielsweise kann eine Pumpeinrichtung 30 zur Erzeugung eines Flüssigkeitskreislaufs vorgesehen sein. Andererseits kann auch eine Frischwasserzuführung und Verdampfung eine geeignete Abführung der Wärme darstellen.

Die Heizeinrichtung 26 kann durch eine durch eine Steuereinrichtung 32 gesteuert werden. Insbesondere kann der Stromfluss durch die Heizeinrichtung 26 durch die Steuereinrichtung 32 der Energieabführeinrichtung 16.1 gesteuert werden. Die Steuereinrichtung 32 kann insbesondere Rechenmittel, wie einen Prozessor, Mikrocontroller, etc. aufweisen. Ferner weist die Steuereinrichtung 32 vorliegend eine Auswerteeinrichtung 20.1 und eine Stromzählereinrichtung 34 auf. Die Steuereinrichtung 32 kann dazu eingerichtet sein, nahezu genau die erfasste Überlastenergie abzuführen. In Abhängigkeit des gemessenen Stroms des Stromnetzes 4 kann die Auswerteeinrichtung 20.1 die Überlastenergie, bzw. eine entsprechende abzuführende Strommenge bestimmen. Vorzugsweise wird dann genau diese Strommenge dem Stromnetz 4 entnommen und zumindest teilweise über die Heizeinrichtung 26 in Wärme gewandelt. Ein anderer Teil kann beispielsweise zum Betrieb der Einrichtung 30 verwendet werden.

Vorzugsweise kann eine kontinuierliche Strommessung durchgeführt werden. Die zu entnehmende Strommenge kann in entsprechender Weise kontinuierlich angepasst werden. Ändert sich die abzuführende Strommenge beispielsweise aufgrund eines in einem Gebäude aktivierten elektrischen Verbrauchers, kann die abgeführte Strommenge entsprechend reduziert werden. Der Stromfluss durch die Heizeinrichtung 26 kann bevorzugt stufenlos zwischen einem Minimalwert und einem Maximalwert einstellbar sein.

Für eine Kommunikation zum Austausch von Daten mit einer entfernten Zentrale z.B. vom Netzbetreiber kann die Steuereinrichtung 32 mit dem Kommunikationsnetz 22 verbunden sein.

Figur 3 zeigt eine schematische Ansicht eines weiteren Ausführungsbeispiels eines Netzüberwachungssystems 2.1. Das dargestellte Stromnetz 4.1 ist ein Niederspannungsnetz 4.1. An dem Niederspannungsnetz 4.1 ist eine Mehrzahl von Gebäuden 6 bzw. Haushalten 6 angeschlossen. Einige dieser Gebäude 6 umfassen darüber hinaus Photovoltaikanlagen 8.

Des Weiteren umfasst das Niederspannungsnetz 4.1 eine Umspanneinrichtung 36, insbesondere einen Leistungstransformator 36. Dieser ist für eine elektrische Kopplung mit einem Mittelspannungsnetz 38 eingerichtet. Insbesondere weist ein Leistungstransformator 36 ein geeignetes Übersetzungsverhältnis zur Transformation der Spannung auf.

Es ist erkannt worden, dass die für ein Stromnetz 4.1 maximal zulässige elektrische Energie insbesondere von dem "schwächsten Glied" des Stromnetzes 4.1 abhängt. Dies kann insbesondere die eingesetzte Umspanneinrichtung 36, insbesondere ein Leistungstransformator 36, sein.

Eine Überlast einer Umspanneinrichtung 36 liegt insbesondere bei Überschreiten einer zulässigen Betriebstemperatur der Umspanneinrichtung 36 vor. Zur Erfassung einer Überlast des Stromnetzes 4.1 weist das Netzüberwachungssystem 12.2, insbesondere die Überlasterfassungseinrichtung 14.2, im vorliegenden Ausführungsbeispiel eine Temperaturmesseinrichtung 18.2 auf. Die Temperaturmesseinrichtung 18.2 ist dazu eingerichtet, die Betriebstemperatur der Umspanneinrichtung 36 zu messen.

Bei Erfassung einer unzulässigen Temperatur kann die Überlastenergie durch die Energieabführeinrichtung 16.2 in Wärme gewandelt und abgeführt werden. Insbesondere kann aus der gemessenen Temperatur die abzuführende Strommenge bestimmt und dem Stromnetz 4.1 entnommen werden. Sinkt die Betriebstemperatur, kann die abzuführende Strommenge entsprechend angepasst werden.

Erfindungsgemäß wird eine Anordnung mit einem dynamischen Überlastschutz bereitgestellt.

Es versteht sich, dass zusätzlich mindestens eine Messeinrichtung zur Erfassung des im Stromnetz fließenden Stroms und/oder mindestens eine Messeinrichtung zur Erfassung der Solarstrahlung vorgesehen sein kann/können.

## Patentansprüche

1. Anordnung (2, 2.1), umfassend:
- mindestens ein Stromnetz (4, 4.1) und
- mindestens ein Netzüberwachungssystem (12, 12.1, 12.2) zum Überwachen des Stromnetzes (4, 4.1),
- wobei mindestens eine Photovoltaikanlage (8) über einen Netzanschluss (24) mit dem Stromnetz (4, 4.1) zum Einspeisen von elektrischer Energie in das Stromnetz (4, 4.1) verbindbar ist,
**dadurch gekennzeichnet, dass**
- das Netzüberwachungssystem (12, 12.1, 12.2) mindestens eine Überlasterfassungseinrichtung (14, 14.1, 14.2) eingerichtet zum Erfassen einer Überlast des Stromnetzes (4, 4.1) aufweist und
- das Netzüberwachungssystem (12, 12.1, 12.2) mindestens eine mit dem Stromnetz (4, 4.1) elektrisch verbindbare Energieabführeinrichtung (16, 16.1, 16.2) aufweist,
- wobei die Energieabführeinrichtung (16, 16.1, 16.2) eingerichtet ist, derart, dass bei einer Überlast des Stromnetzes (4, 4.1) zumindest die elektrische Überlastenergie zumindest teilweise in Form von Wärmeenergie aus dem Stromnetz (4, 4.1) abgeführt wird.

2. Anordnung (2, 2.1) nach Anspruch 1, **dadurch gekennzeichnet, dass** die Energieabführeinrichtung (16, 16.1, 16.2) mindestens eine Heizeinrichtung (26) aufweist, wobei die Heizeinrichtung (26) eingerichtet ist, zumindest einen Teil der elektrischen Überlastenergie in Wärmeenergie zu wandeln.

3. Anordnung (2, 2.1) nach Anspruch 2, **dadurch gekennzeichnet, dass** die Energieabführeinrichtung (16, 16.1, 16.2) zur Abführung der Wärmeenergie eine Gaskühlung und/oder eine Flüssigkeitskühlung aufweist.

4. Anordnung (2, 2.1) nach einem der vorherigen Ansprüche, **dadurch gekennzeichnet, dass**
- das Netzüberwachungssystem (12, 12.1, 12.2) mindestens eine Messeinrichtung (18, 18.1, 18.2) eingerichtet zum Messen von mindestens einem Netzlastparameter aufweist, und
- das Netzüberwachungssystem (12, 12.1, 12.2) mindestens eine Auswerteeinrichtung (20, 20.1) eingerichtet zum Erfassen einer Überlast des Stromnetzes (4, 4.1) durch einen Vergleich des gemessenen Netzlastparameters mit einem vorgegebenen Netzlastgrenzwert aufweist.

5. Anordnung (2, 2.1) nach Anspruch 4, **dadurch gekennzeichnet, dass** die Auswerteeinrichtung (20, 20.1) eingerichtet ist, in Abhängigkeit des gemessenen Netzlastparameters die abzuführende Überlastenergie zu bestimmen.

6. Anordnung (2, 2.1) nach Anspruch 5, **dadurch gekennzeichnet, dass**
- eine Steuereinrichtung (32) zur Steuerung der Heizeinrichtung (26) vorgesehen ist,
- wobei die Steuereinrichtung (32) eingerichtet ist, die Heizeinrichtung (26) in Abhängigkeit der bestimmten abzuführenden Überlastenergie zu steuern.

7. Anordnung (2, 2.1) nach einem der Ansprüche 4 bis 6,
**dadurch gekennzeichnet, dass**
- der gemessene Netzlastparameter ein im Stromnetz (4, 4.1) fließender Strom ist,
und/oder
- der gemessene Netzlastparameter die auf die Photovoltaikanlage (8) auftreffende Solarstrahlung ist.

8. Anordnung (2, 2.1) nach einem der vorherigen Ansprüche, **dadurch gekennzeichnet, dass**
- das Stromnetz (4, 4.1) ein Niederspannungsnetz (4, 4.1) ist,
- das Niederspannungsnetz (4, 4.1) mindestens eine Umspanneinrichtung (36) zur elektrischen Kopplung mit einem Mittelspannungsnetz (38) aufweist und
- der gemessene Netzlastparameter die Temperatur der Umspanneinrichtung (36) ist.

9. Anordnung (2, 2.1) nach einem der vorherigen Ansprüche 2 bis 8, **dadurch gekennzeichnet, dass** die Heizeinrichtung in einem Wärmespeicher eines Gebäudes integriert ist.

10. Verfahren zum Überwachen eines Stromnetzes (4, 4.1), wobei mindestens eine mit dem Stromnetz (4, 4.1) über einen Netzanschluss (24) verbindbare Photovoltaikanlage (8) vorgesehen ist, umfassend:
- Erfassen einer Überlast des Stromnetzes (4, 4.1) und
- Abführen zumindest der elektrischen Überlastenergie aus dem Stromnetz (4, 4.1) zumindest teilweise in Form von Wärmeenergie bei einer Erfassung einer Überlast des Stromnetzes (4, 4.1).

11. Verwendung einer Energieabführeinrichtung (16, 16.1, 16.2) mit mindestens einer Heizeinrichtung (26) zur Abführung von zumindest der elektrischen Überlastenergie aus einem von mindestens einer Photovoltaikanlage (8) speisbaren Stromnetz (4, 4.1).
